# EUROPEAN PATENT APPLICATION

(11) **EP 4 686 842 A1**
(43) Date of publication of application: **04.02.2026**
(21) Application number: 25191459.4
(22) Date of filing: 24.07.2025
(51) Int. Cl.: F16B 25/00, F16B 25/10

(54) **SELF-DRILLING SELF-TAPPING FASTENER**

(30) Priority: 29.07.2024 US 202463676708 P; 01.07.2025 US 202519257119
(71) Applicant: Illinois Tool Works Inc., Glenview IL 60025 (US)
(72) Inventor: GONG, Yongping, Glenview, IL 60025 (US)
(74) Representative: HGF

(57) **Abstract**

A self-drilling self-tapping fastener for connecting more than two objects such as more than two layers of panels.

## Description

### PRIORITY CLAIM

This application claims priority to and the benefit of U.S. Provisional Patent Application No. 63/676,708, filed July 29, 2024, the entire contents of which are incorporated herein by reference.

### BACKGROUND

Fasteners are well known and widely used throughout the world to secure object together. Various known fasteners include: (a) a head including a mechanical engaging structure engageable by a tool, (b) a shank extending from the head, and (c) a helical thread formation outwardly extending from the shank for frictionally engaging the objects into which the fastener is driven. Certain known self-drilling self-tapping fasteners have a shank that also includes a drill tip and at least one flute. The drill tip and the flute(s) enable the self-drilling self-tapping fastener to cut holes in the objects and tap threads into which the fastener is driven.

In certain circumstances, it is desirable to connect more than two objects such as more than two layers of panels. In certain cases, there are gaps or other materials (such as but not limited to insulations) between the fastened metal panels or plates. In certain cases, if the thread formation engages an outermost layer prior to the drill tip fully drilling through and extending through an innermost layer, the thread formation can cause the outermost layer to separate from the rest of the layers in an undesired manner or the drill tip may be broken and cannot drill through all panels. Additionally, in certain circumstances that include multiple layers, enhanced pull-out strength and enhanced shear strength are desired for such fasteners.

Accordingly, there is a need for self-drilling self-tapping fasteners that have enhanced performance for use in connecting more than two objects such as more than two layers of panels and/or for use in connecting more than two objects with gaps in between.

### SUMMARY

The present disclosure provides a self-drilling self-tapping fastener that has enhanced performance for use in connecting more than two objects such as layers of panels, and that have enhanced pull-out strength and enhanced shear strength when connecting such multiple objects such as layers of panels.

In various embodiments of the present disclosure, the self-drilling self-tapping fastener includes: (1) a head, (2) a shank integrally connected to and extending from the head and including a first shank portion, a second shank portion, a third shank portion, and a fourth shank portion, and (3) a helical thread formation integrally connected to and extending radially outwardly from the second shank portion but not from the first shank portion, not form the third shank portion, and not from the fourth shank portion. The third shank portion defines a transition area and the fourth shank portion defines a longitudinally extending first flute and a longitudinally extending second flute. The fourth shank portion includes a drill tip. The drill tip includes a first cutting blade having a first cutting edge and a second cutting blade having a second cutting edge. The first cutting edge and the second cutting edge are tapered toward each other. The head, the shank, and the helical thread formation are specifically configured and sized such that the self-drilling self-tapping fastener has improved performance in pullout force and shear strength when employed for connecting more than two objects such as more than two layers of panels and/or for use in connecting more than two objects with gaps in between.

Other objects, features, and advantages of the present disclosure will be apparent from the following detailed disclosure and accompanying drawings.

### BRIEF DESCRIPTION OF THE FIGURES

Figure 1 shows end and side views of a known self-drilling self-tapping fastener.
Figure 2 is a perspective view of a self-drilling self-tapping fastener in accordance with one example embodiment of the present disclosure.
Figure 3 is a first side view of the self-drilling self-tapping fastener of Figure 2.
Figure 4 is a top view of the self-drilling self-tapping fastener of Figure 2.
Figure 5 shown the first side view of the self-drilling self-tapping fastener of Figure 2 and various dimensions thereof.
Figure 6 is an end view of the self-drilling self-tapping fastener of Figure 2 and various dimensions thereof.
Figure 7 is another perspective view of the self-drilling self-tapping fastener of Figure 2.
Figure 8 is a side view of the self-drilling self-tapping fastener of Figure 2 shown with respect to multiple objects.
Figure 9 is a side view of a self-drilling self-tapping fastener in accordance with another example embodiment of the present disclosure.
Figure 10 is a top view of the self-drilling self-tapping fastener of Figure 9.
Figure 11 is a side view of a self-drilling self-tapping fastener in accordance with another example embodiment of the present disclosure.
Figure 12 is a top view of the self-drilling self-tapping fastener of Figure 11.
Figure 13 is a bottom view of the self-drilling self-tapping fastener of Figure 11.

### DETAILED DESCRIPTION

While the systems, devices, and methods described herein may be embodied in various forms, the drawings show and the specification describes certain exemplary and non-limiting embodiments. Not all components shown in the drawings and described in the specification may be required, and certain implementations may include additional, different, or fewer components. Variations in the arrangement and type of the components; the shapes, sizes, and materials of the components; and the manners of connections of the components may be made without departing from the spirit or scope of the claims. Unless otherwise indicated, any directions referred to in the specification reflect the orientations of the components shown in the corresponding drawings and do not limit the scope of the present disclosure. Further, terms that refer to mounting methods, such as mounted, connected, etc., are not intended to be limited to direct mounting methods but should be interpreted broadly to include indirect and operably mounted, connected, and like mounting methods. This specification is intended to be taken as a whole and interpreted in accordance with the principles of the present disclosure and as understood by one of ordinary skill in the art.

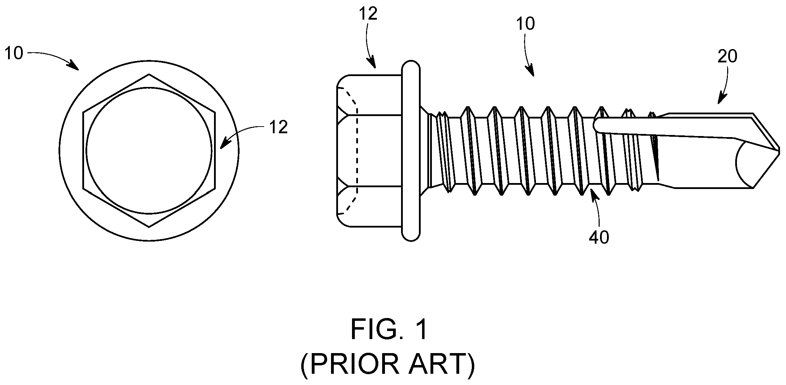

Figure 1 illustrates a known self-drilling self-tapping fastener 10. This known fastener 10 is a ¼ by 1" inch fastener. This known fastener 10 includes a head 12, a shank 20 integrally connected at one end to the head 12, and a helical thread formation 40 integrally connected to the shank 20. The shank 20 which is one inch long includes a first shank portion (not labeled) integrally connected to and extending from the head 12, and a second shank portion (not labeled) integrally connected to and extending from the first shank portion opposite the head 12. The second shank portion includes opposing flutes (not labeled). One of these flutes is shown in Figure 1. The second shank portion functions as the drilling portion of the shank 20 and enables the fastener 10 to be used to drill aligned holes in the objects into which the fastener 10 will be tapped, fastened, and secured. The helical thread formation 40 extends outwardly from the first shank portion and also from part of the second shank portion. Thus, the fastener 10 includes a thread formation on the shank that extends into the flute area of the shank 20. In certain instances where this fastener 10 is used to connect multiple objects (such as multiple panels) depending on the quantity and thickness of the objects (such as the panel), the thread formation 40 engages an outermost object prior to the second shank portion with the flutes fully drilling through and extending through the innermost object. The thread formation 40 causes the outermost object to separate from the rest of the objects in an undesired manner.

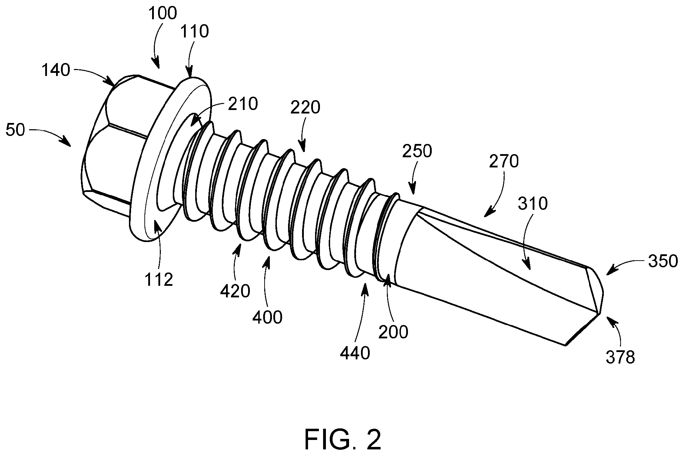

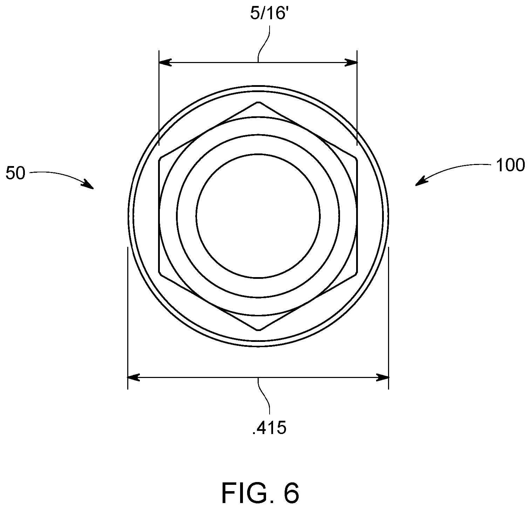

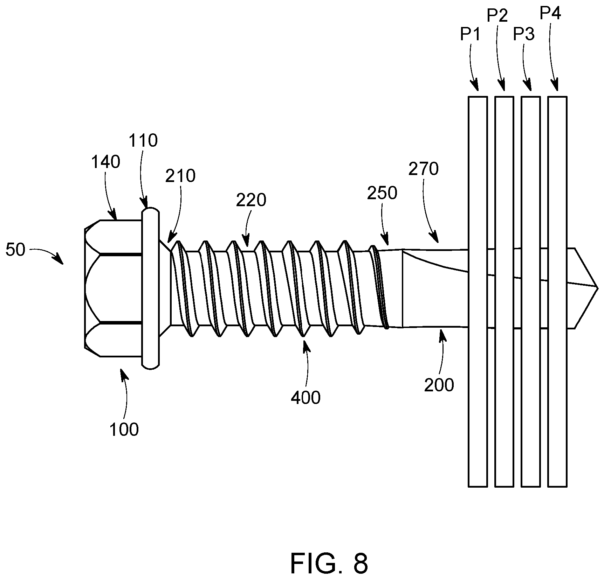

Figures 2, 3, 4, 5, 6, 7, and 8 illustrate a self-drilling self-tapping fastener of one example embodiment of the present disclosure, generally indicated by numeral 50 and sometimes called the "fastener" herein for brevity. The example fastener 50 is particularly configured for use in connecting multiple objects such as the multiple metal panels P1, P2, P3, and P4 shown in Figure 8. As further described below, the fastener 50 is configured such that the thread formation 400 on the shank 200 does not engage the outermost object such as P1 prior to the fourth shank portion with the flutes fully drilling through and extending through the innermost object such as panel P4 shown. The thread formation 400 thus does not cause the outermost object to separate from the rest of the objects in an undesired manner. It should also be appreciated that the fastener 50 can be employed for a variety of different uses in accordance with the present disclosure.

More specifically, the fastener 50 has a longitudinal central axis (not shown) and includes: (a) a head 100; (b) a shank 200 integrally connected at one end to the head 100; and (c) a helical thread formation 400 integrally connected to the shank 200. The shank 200 includes: (1) a first shank portion 210 integrally connected to and extending from the head 100; (2) a second shank portion 220 integrally connected to and extending from the first shank portion; (3) a third shank portion 250 integrally connected to and extending from the second shank portion 220; and (4) a fourth shank portion 270 integrally connected to and extending from the third shank portion 250. The helical thread formation 400 extends outwardly from the second shank portion 220 but does not extend outwardly: (i) from the first shank portion 210, (ii) from the third shank portion 250, or (iii) from the fourth shank portion 270. The third shank portion 250 functions as a transition portion of the shank 200. The fourth shank portion 270 functions as the drilling portion of the shank 200 and enables the fastener 50 to be used to drill aligned holes in multiple objects (such as panels P1, P2, P3, and P4) into which the fastener 50 will be tapped, fastened, and secured.

In this example embodiment, the head 100, the shank 200, and the thread formation 400 are monolithically formed.

In this example embodiment, the fastener 50 is made from a low carbon steel (such as but not limited to an AISI 1022 low carbon steel).

In this example embodiment, the fastener 50 is made using a heat treatment of case hardening to provide a hardened fastener surface so that the fastener point can self-drill into steel objects and the thread formation can self-tap its own way to engage with steel objects. In this example embodiment, the hardened fastener surface case depth is maintained in a reasonable range because if the case depth is too deep, it can make the fastener too brittle. In this example embodiment, the case hardening process also provides a lower fastener core hardness to ensure that the fastener has enough ductility. If the core hardness is too high, it can make the fastener too brittle, and become vulnerable to hydrogen embrittlement failure and/or hydrogen assisted stress corrosion.

In this example embodiment, the fastener 50 has a suitable coating (not shown) to provide corrosion protection and to provide lubrication when the fastener drills into one or more steel objects.

In this example embodiment, the fastener 50 is made by: (1) cold-forming (or otherwise milling) a carbon steel member (not shown but further described below) that is sometimes initially called a blank having a suitable length and a suitable width; (2) then forming (such as by forging) the carbon steel member to form the head 100; (3) then forming (such as by forging or milling) the carbon steel member to form the fourth shank portion 270; (4) then forming (such as by roll threading) the carbon steel member to form the thread formation 400; (5) then heat treating the carbon steel member; and (6) then coating the carbon steel member with a suitable corrosion resistance coating and curing this coating on the carbon steel member. It should be appreciated that one or more suitable cleaning and/or deburring processes may be employed in accordance with the present disclosure to form the fastener 50.

More specifically, the head 100 includes a bottom portion 110 and a top portion 140 integrally connected to the bottom portion 110.

The bottom portion 110 of the head 100 is annular and has an outer diameter larger than width of 110, and thick enough to function as an integrated washer. The annular bottom portion 110 has a bottom surface 112, a top surface 114, and a generally cylindrical outer edge 116 extending from and connect the bottom surface 112 to the top surface 114. The outer edge 116 is rounded or convex along its entire surface. The bottom portion 110 is also integrally connected to the first shank portion 210 which is a tapered portion (or can be a chamfer or a fillet). In various embodiments, this tapered portion is needed for manufacturing reasons and also to avoid stress concentration under the head 100.

The top portion 140 of the head 100 defines an external hexagonal mechanical engaging structure having six sides (not labeled) and six corners (not labeled) that define an upper recessed portion (not labeled). The six sides are engageable by an appropriate wrench or hex socket (not shown) configured to rotate and drive the self-drilling self-tapping fastener 50.

In this example embodiment, the top portion 140 of the head 100 has a height of 0.147 inches (0.37cms). The top portion 140 has an outer width of 0.305 inches (0.78 cms) from side to side. The top portion 140 has an outer width of 0.350 inches (0.89 cms) from corner to corner.

It should be appreciated that other suitable mechanical engaging structures (not shown) can be employed in accordance with the present disclosure, such as but not limited to: (1) a straight slot (engageable by a flathead screwdriver), (2) a cross-shaped slot (engageable by a Phillips head screwdriver), (3) an internal star or six lobe shaped cavity (engageable by a six lobe driver), or (4) an internal hexagonal shaped cavity (engageable by an Allen wrench).

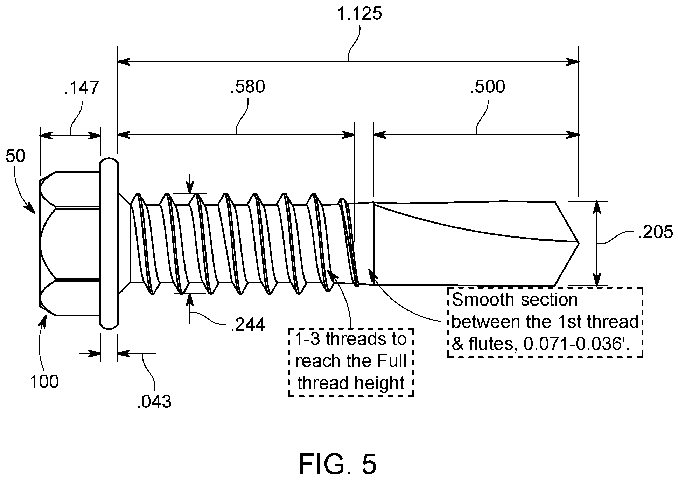

The shank 200 has a longitudinal length as indicated in Figure 5, which is 1.125 inches (2.86 cms), and includes: (1) the first shank portion 210; (2) the second shank portion 220; (3) the third shank portion 250; and (4) the fourth shank portion 270.

The first shank portion 210 is integrally connected to the head 100 at an inner end (not labeled) and is integrally connected to the second shank portion 220 at an outer end (not labeled). The first shank portion 210 is tapered from the head 100 to the second shank portion 220.

The second shank portion 220 is integrally connected to the first shank portion 210 at an inner end (not labeled) and is integrally connected to the third shank portion 250 at an outer end (not labeled). The second shank portion 220 is annular and has a constant outer diameter (OD) from the inner end (adjacent to the first shank portion 210) to the outer end (adjacent to the third shank portion 250). The second shank portion 220 has a length as indicated in Figure 5 and which is 0.580 inches (1.47 cms).

The third shank portion 250 is integrally connected to the second shank portion 230 at an inner end (not labeled) and is integrally connected to the fourth shank portion 270 at an outer end (not labeled). The third shank portion 250 has a length as indicated in Figure 5 and which is 0.045 inches (0.11 cms). The third shank portion 250 functions as a transition areas between the flutes (described below) of the fourth shank portion 270 and the thread formation 400 on the second shank portion 230 to ensure that the drilling of all of the multiple objects is complete before the thread formation 400 engages the outmost object (such as P1 in Figure 8) .

The fourth shank portion 270 includes an inner end (not labeled) that is integrally connected to the third shank portion 250 and an outer end (not labeled). The outer end is a free end and includes a drill tip 350 such as described below. The fourth shank portion 270 is configured to enable the fastener 50 to be self-drilling. In particular, the fourth shank portion 270: (1) defines a longitudinally extending first flute 310; (2) defines a longitudinally extending second flute 330 and (3) includes the drill tip 350.

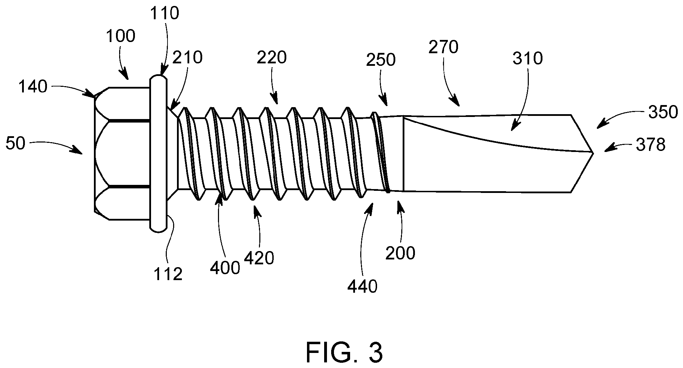

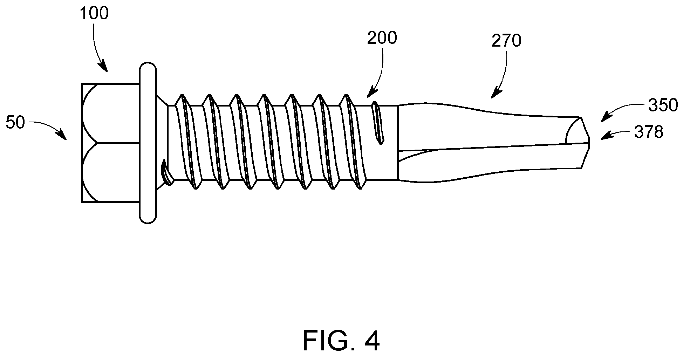

The fourth shank portion 270 is partially annular and has multiple different outer surfaces and outer diameters, as further described below. In this example embodiment, the fourth shank portion 270 has a length indicated in Figure 4, and which is 0.500 inches (1.27 cms). When viewed from the side shown in Figures 3 and 5, the fourth shank portion 270 has a first constant outer diameter until reaching the drill tip 350. When viewed from the top shown in Figure 4, the fourth shank portion 270 has a narrowing outer width.

The first flute 310 defined in the fourth shank portion 270 includes a longitudinally extending first surface (not labeled) and a longitudinally extending second surface (not labeled). The longitudinally extending first surface and the longitudinally extending second surface meet along a longitudinally extending connection line (not labeled).

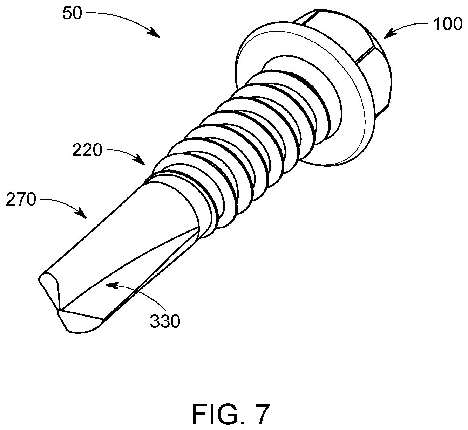

Likewise, the second flute shown in Figure 7 defined in the fourth shank portion 270 includes a longitudinally extending first surface (not shown) and a longitudinally extending second surface (not shown). The longitudinally extending first surface and the longitudinally extending second surface meet along a longitudinally extending connection line.

The first and second flutes provide part of the self-drilling functionality of the fastener 50, and particularly provide areas for the debris cut by the drill tip 350 to move along part of the length of the shank 200 of the fastener 50 and out of the hole(s) being formed by the fastener 50 in the objects to which the fastener 50 will be tapped, fastened, and secured.

For each flute, the flute length in this example embodiment is 0.500 inches (1.27 cms).

This relatively long flute length in part enables the fastener 50 to be drilled through the multiple objects such as shown in Figure 8. Specifically, the longer flute length enables the entire drill tip 350 of the fourth shank portion 270 to extend through the multiple objects before the thread formation 400 engages any of the objects such as the panels P1, P2, P3, and P4.

The drill tip 350 includes: (1) a first cutting blade (not labeled) having a first cutting edge (not labeled), a first cutting surface (not labeled), and an outer surface (not labeled); and (2) a second cutting blade (not labeled) having a second cutting edge (not labeled), a first cutting surface (not labeled), and an outer surface (not labeled). The first cutting blade and the second cutting blade are tapered toward each other and specifically the first cutting edge and the second cutting edge are tapered toward each other, and form a 110-130 degree point angle.

The outer diameter of the drill tip 350 decreases moving along the longitudinal axis in the direction of or toward the pointed end from: (1) a point outer diameter of 0.204 inches (0.52 cms), and (2) a sharp point at the drill point 378. The drill tip 350 has a cold-formed as a sharp point in this embodiment. In various other embodiments, the drill tip 350 is otherwise suitably rounded or formed.

The first cutting edge extends at an angle to the outer surface of the fourth shank portion 270. The second cutting edge also extends at an angle to the outer surface of the fourth shank portion 270. In this example embodiment, the point cutting edge angle is 120 degrees.

The drill tip 350 is directly positioned along the central longitudinal axis, but may slightly vary from being along the central longitudinal axis such as due to manufacturing tolerances.

The point eccentricity or total indicator reading (TIR) of the drill tip 350 is 0.010 or less inches (0.025 or less cms). The point eccentricity or TIR is the difference between the maximum and minimum measurement readings of an indicator on the planar or cylindrical contoured surfaces of the drill tip 350 representing its/their respective amount(s) of deviation from flatness or roundness.

The helical thread formation 400 is integrally connected to and extends radially outwardly from the first portion 220 of the shank 200 but not the second portion 250 and not the third portion 270 of the shank 200. The helical thread formation 400 extends along substantially the entire second shank portion 220.

The helical thread formation 400 includes: (1) a first helical thread portion 420; and (2) a second helical thread portion 440.

The helical thread formation 400 has a substantially constant outer diameter from start of the thread formation 400 adjacent to the head 100 to almost the end of the thread formation 400 on the second shank portion 220 (which is the first helical thread portion 420). More specifically, the top section (left side) of the second shank portion 220 has threads with a full thread height and the bottom section (right side) of the second shank portion 220 includes the first 1-3 threads that do not have full thread height. This enables the thread to tap into steel smoothly. Thus, the outer diameter or height of the thread formation 400 begins to decrease until gradually terminating at the outer surface of the second shank portion 220.

The helical thread formation 400 has a length (LHTF) of 0.580 inches (1.47 cms) as shown in Figure 5.

The thread outer diameter (OD) of the helical thread formation 400 is 0.244 inches (0.62 cms).

The pitch distance of the helical thread formation 400 is 14 tpi (and preferably 14 threads per inch (5.5 threads per cm)).

The thread at run-out of the helical thread formation 400 is 1-3 thread, which means the thread outer diameter gradually decreased and merges with shank.

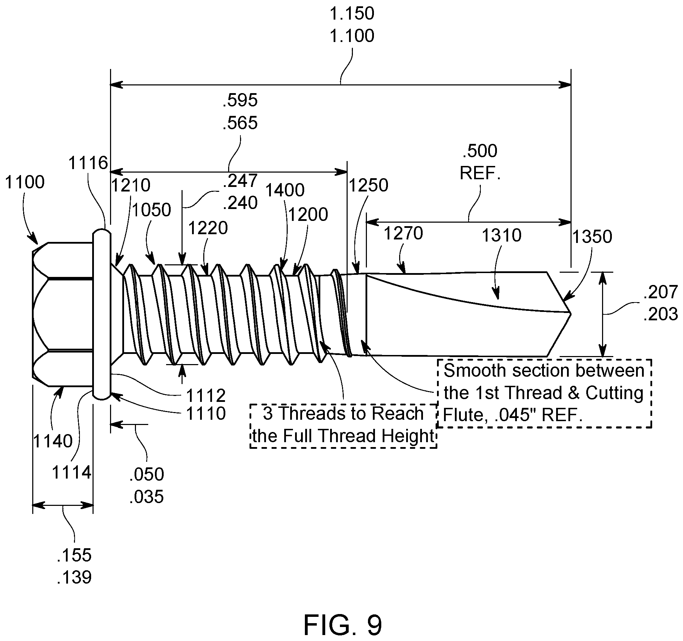

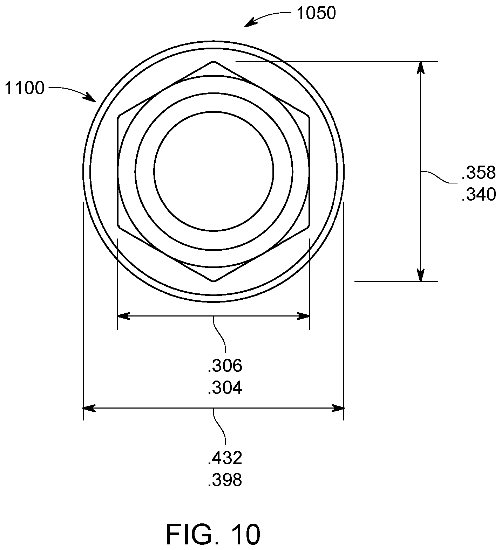

Figures 9 and 10 illustrate a self-drilling self-tapping fastener of another example embodiment of the present disclosure, generally indicated by numeral 1050 and sometimes called the "fastener" herein for brevity. The example fastener 1050 is also particularly configured for use in connecting multiple objects such as the multiple metal panels such as the panels P1, P2, P3, and P4 shown in Figure 8. As further described below, the fastener 1050 is configured such that the thread formation 1400 on the shank 1200 does not engage the outermost object such as P1 prior to the fourth shank portion with the flutes fully drilling through and extending through the innermost object such as panel P4. The thread formation 1400 thus does not cause the outermost object to separate from the rest of the objects in an undesired manner. It should also be appreciated that the fastener 1050 can be employed for a variety of different uses in accordance with the present disclosure.

Similar to the fastener 50 described above, the fastener 1050 has a longitudinal central axis (not shown) and generally includes: (a) a head 1100; (b) a shank 1200 integrally connected at one end to the head 1100; and (c) a helical thread formation 1400 integrally connected to the shank 1200. The shank 1200 includes: (1) a first shank portion 1210 integrally connected to and extending from the head 1100; (2) a second shank portion 1220 integrally connected to and extending from the first shank portion 1210; (3) a third shank portion 1250 integrally connected to and extending from the second shank portion 1220; and (4) a fourth shank portion 1270 integrally connected to and extending from the third shank portion 1250. The helical thread formation 1400 extends outwardly from the second shank portion 1220 but does not extend outwardly: (i) from the first shank portion 1210, (ii) from the third shank portion 1250, or (iii) from the fourth shank portion 1270. The third shank portion 1250 functions as a transition portion of the shank 1200. The fourth shank portion 1270 functions as the drilling portion of the shank 1200 and enables the fastener 1050 to be used to drill aligned holes in multiple objects (such as panels P1, P2, P3, and P4) into which the fastener 1050 will be tapped, fastened, and secured.

In this example embodiment, the head 1100, the shank 1200, and the thread formation 1400 are monolithically formed.

In this example embodiment, the fastener 1050 is made from a low carbon steel (such as but not limited to an AISI 1022 low carbon steel).

In this example embodiment, the fastener 1050 is made using a heat treatment of case hardening to provide a hardened fastener surface so that the fastener point can self-drill into steel objects and the thread formation can self-tap its own way to engage with steel objects. In this example embodiment, the hardened fastener surface case depth is maintained in a reasonable range because if the case depth is too deep, it can make the fastener too brittle. In this example embodiment, the case hardening process also provides a lower fastener core hardness to ensure that the fastener has enough ductility. If the core hardness is too high, it can make the fastener too brittle, and become vulnerable to hydrogen embrittlement failure and/or hydrogen assisted stress corrosion.

In this example embodiment, the fastener 1050 has a suitable coating (not shown) to provide corrosion protection and to provide lubrication when the fastener drills into one or more steel objects.

In this example embodiment, the fastener 1050 is made by: (1) cold-forming (or otherwise milling) a carbon steel member (not shown but further described below) that is sometimes initially called a blank having a suitable length and a suitable width; (2) then forming (such as by forging) the carbon steel member to form the head 1100; (3) then forming (such as by forging or milling) the carbon steel member to form the fourth shank portion 1270; (4) then forming (such as by roll threading) the carbon steel member to form the thread formation 1400; (5) then heat treating the carbon steel member; and (6) then coating the carbon steel member with a suitable corrosion resistance coating and curing this coating on the carbon steel member. It should be appreciated that one or more suitable cleaning and/or deburring processes may be employed in accordance with the present disclosure to form the fastener 1050.

More specifically, the head 1100 includes a bottom portion 1110 and a top portion 1140 integrally connected to the bottom portion 1110.

The bottom portion 1110 of the head 1100 is annular and has an outer diameter larger than width of 1110, and thick enough to function as an integrated washer. The annular bottom portion 1110 has a bottom surface 1112, a top surface 1114, and a generally cylindrical outer edge 1116 extending from and connect the bottom surface 1112 to the top surface 1114. The outer edge 1116 is rounded or convex along its entire surface. The bottom portion 1110 is also integrally connected to the first shank portion 1210 which is a tapered portion (or can be a chamfer or a fillet). In various embodiments, this tapered portion is needed for manufacturing reasons and also to avoid stress concentration under the head 1100.

The top portion 1140 of the head 1100 defines an external hexagonal mechanical engaging structure having six sides (not labeled) and six corners (not labeled) that define an upper recessed portion (not labeled). The six sides are engageable by an appropriate wrench or hex socket (not shown) configured to rotate and drive the self-drilling self-tapping fastener 1050.

In this example embodiment, the top portion 1140 of the head 1100 has a height of 0.147 inches (0.37 cms). The top portion 1140 has an outer width of 0.305 inches (0.77 cms) from side to side. The top portion 1140 has an outer width of 0.340 inches (0.86 cms) from corner to corner.

It should be appreciated that other suitable mechanical engaging structures (not shown) can be employed in accordance with the present disclosure, such as but not limited to: (1) a straight slot (engageable by a flathead screwdriver), (2) a cross-shaped slot (engageable by a Phillips head screwdriver), (3) an internal star or six lobe shaped cavity (engageable by a six lobe driver), or (4) an internal hexagonal shaped cavity (engageable by an Allen wrench).

The shank 1200 has a longitudinal length as indicated in Figure 9, which is 1.125 inches (2.86 cms), and includes: (1) the first shank portion 1210; (2) the second shank portion 1220; (3) the third shank portion 1250; and (4) the fourth shank portion 1270.

The first shank portion 1210 is integrally connected to the head 1100 at an inner end (not labeled) and is integrally connected to the second shank portion 1220 at an outer end (not labeled). The first shank portion 1210 is tapered from the head 1100 to the second shank portion 1220.

The second shank portion 1220 is integrally connected to the first shank portion 1210 at an inner end (not labeled) and is integrally connected to the third shank portion 1250 at an outer end (not labeled). The second shank portion 1220 is annular and has a constant outer diameter (OD) from the inner end (adjacent to the first shank portion 1210) to the outer end (adjacent to the third shank portion 1250). The second shank portion 1220 has a length as indicated in Figure 9 and which is 0.580 inches (1.47 cms).

The third shank portion 1250 is integrally connected to the second shank portion 1220 at an inner end (not labeled) and is integrally connected to the fourth shank portion 1270 at an outer end (not labeled). The third shank portion 1250 has a length as indicated in Figure 9 and which is 0.045 inches (0.11 cms). The third shank portion 1250 functions as a transition areas between the flutes (described below) of the fourth shank portion 1270 and the thread formation 1400 on the second shank portion 1230 to ensure that the drilling of all of the multiple objects is complete before the thread formation 1400 engages the outmost object (such as P1 in Figure 8).

The fourth shank portion 1270 includes an inner end (not labeled) that is integrally connected to the third shank portion 1250 and an outer end (not labeled). The outer end is a free end and includes a drill tip 1350 such as described below. The fourth shank portion 1270 is configured to enable the fastener 1050 to be self-drilling. In particular, the fourth shank portion 1270: (1) defines a longitudinally extending first flute 1310; (2) defines a longitudinally extending second flute (not shown), and (3) includes the drill tip 1350.

The fourth shank portion 1270 is partially annular and has multiple different outer surfaces and outer diameters, as further described below. In this example embodiment, the fourth shank portion 1270 has a length indicated in Figure 9, and which is 0.500 inches (1.27 cms). When viewed from the side, the fourth shank portion 1270 has a first constant outer diameter until reaching the drill tip 1350. When viewed from the top, the fourth shank portion 1270 has a narrowing outer width.

The first flute 1310 defined in the fourth shank portion 1270 includes a longitudinally extending first surface (not labeled) and a longitudinally extending second surface (not labeled). The longitudinally extending first surface and the longitudinally extending second surface meet along a longitudinally extending connection line (not labeled).

Likewise, the second flute (not shown) defined in the fourth shank portion 1270 includes a longitudinally extending first surface (not shown) and a longitudinally extending second surface (not shown). The longitudinally extending first surface and the longitudinally extending second surface meet along a longitudinally extending connection line.

The first and second flutes provide part of the self-drilling functionality of the fastener 1050, and particularly provide areas for the debris cut by the drill tip 1350 to move along part of the length of the shank 1200 of the fastener 1050 and out of the hole(s) being formed by the fastener 1050 in the objects to which the fastener 1050 will be tapped, fastened, and secured.

For each flute, the flute length in this example embodiment is 0.500 inches (1.27 cms).

This relatively long flute length in part enables the fastener 1050 to be drilled through the multiple objects. Specifically, the longer flute length enables the entire drill tip 1350 of the fourth shank portion 1270 to extend through the multiple objects before the thread formation 1400 engages any of the objects such as the panels P1, P2, P3, and P4.

The drill tip 1350 of the fourth shank portion 1270 includes a drill tip point.

The drill tip 1350 includes: (1) a first cutting blade (not labeled) having a first cutting edge (not labeled), a first cutting surface (not labeled), and an outer surface (not labeled); and (2) a second cutting blade (not labeled) having a second cutting edge (not labeled), a first cutting surface (not labeled), and an outer surface (not labeled). The first cutting blade and the second cutting blade are tapered toward each other and specifically the first cutting edge and the second cutting edge are tapered toward each other, and form a 110-130 degree point angle.

The outer diameter of the drill tip 1350 decreases moving along the longitudinal axis in the direction of or toward the pointed end from: (1) a point outer diameter of 0.204 inches (0.52 cms), and (2) a sharp point at the drill point. The drill tip 1350 has a cold-formed as a sharp point in this embodiment. In various other embodiments, the drill tip 1350 is otherwise suitably rounded or formed.

The first cutting edge extends at an angle to the outer surface of the fourth shank portion 1270. The second cutting edge also extends at an angle to the outer surface of the fourth shank portion 1270. In this example embodiment, the point cutting edge angle is 120 degrees.

The drill tip 1350 is directly positioned along the central longitudinal axis, but may slightly vary from being along the central longitudinal axis such as due to manufacturing tolerances.

The point eccentricity or total indicator reading (TIR) of the drill tip 1350 is 0.010 or less inches (0.025 or less cms). The point eccentricity or TIR is the difference between the maximum and minimum measurement readings of an indicator on the planar or cylindrical contoured surfaces of the drill tip 1350 representing its/their respective amount(s) of deviation from flatness or roundness.

The helical thread formation 1400 is integrally connected to and extends radially outwardly from the first portion 1220 of the shank 1200 but not the second portion 1250 and not the third portion 1270 of the shank 1200. The helical thread formation 1400 extends along substantially the entire second shank portion 1220.

The helical thread formation 1400 includes: (1) a first helical thread portion 1420; and (2) a second helical thread portion 1440.

The helical thread formation 1400 has a substantially constant outer diameter from start of the thread formation 1400 adjacent to the head 100 to almost the end of the thread formation 11400 on the second shank portion 220 (which is the first helical thread portion 1420). More specifically, the top section (left side) of the second shank portion 1220 has threads with a full thread height and the bottom section (right side) of the second shank portion 1220 includes the first 1-3 threads that do not have full thread height. This enables the thread to tap into steel smoothly. Thus, the outer diameter or height of the thread formation 1400 begins to decrease until gradually terminating at the outer surface of the second shank portion 1220.

The helical thread formation 1400 has a length (LHTF) of 0.580 inches (1.47 cms).

The thread outer diameter (OD) of the helical thread formation 1400 is 0.244 inches (0.62 cms).

The pitch distance of the helical thread formation 1400 is 14 tpi (and preferably 14 threads per inch (5.5 threads per cm)).

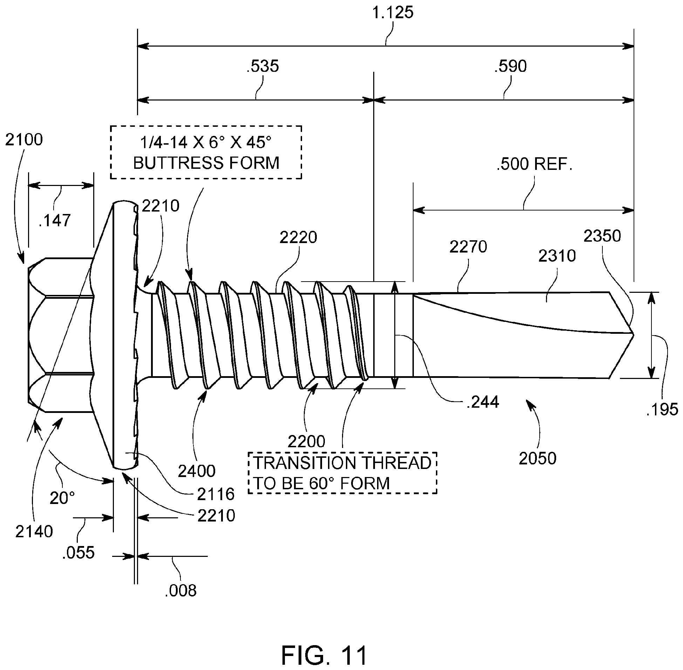

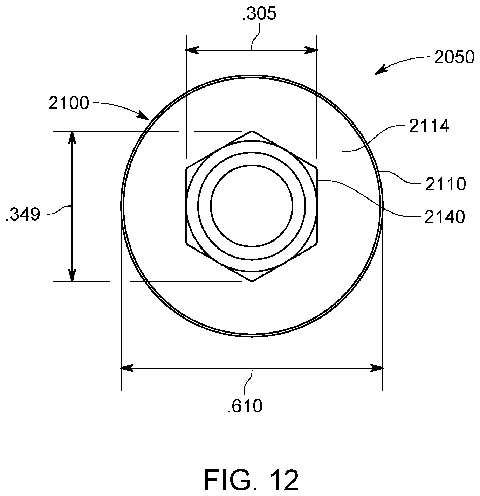

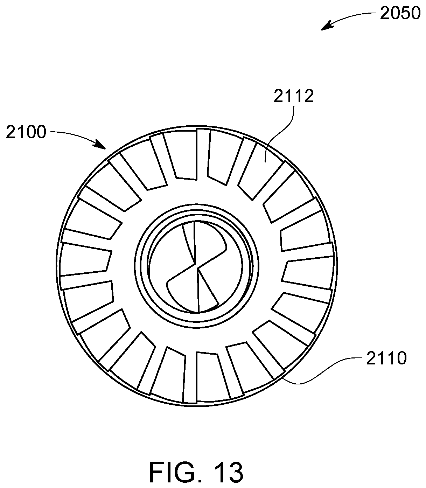

Figures 11, 12, and 13 illustrate a self-drilling self-tapping fastener of another example embodiment of the present disclosure, generally indicated by numeral 2050 and sometimes called the "fastener" herein for brevity. The example fastener 2050 is also particularly configured for use in connecting multiple objects such as the multiple metal panels such as the panels P1, P2, P3, and P4 shown in Figure 8. As further described below, the fastener 2050 is configured such that the thread formation 2400 on the shank 2200 does not engage the outermost object such as P1 prior to the fourth shank portion with the flutes fully drilling through and extending through the innermost object such as panel P4. The thread formation 2400 thus does not cause the outermost object to separate from the rest of the objects in an undesired manner. It should also be appreciated that the fastener 2050 can be employed for a variety of different uses in accordance with the present disclosure.

Similar to the fastener 50 described above, the fastener 2050 has a longitudinal central axis (not shown) and generally includes: (a) a head 2100; (b) a shank 2200 integrally connected at one end to the head 2100; and (c) a helical thread formation 2400 integrally connected to the shank 2200. The shank 2200 includes: (1) a first shank portion 2210 integrally connected to and extending from the head 2100; (2) a second shank portion 2220 integrally connected to and extending from the first shank portion 2210; (3) a third shank portion 2250 integrally connected to and extending from the second shank portion 2220; and (4) a fourth shank portion 2270 integrally connected to and extending from the third shank portion 2250. The helical thread formation 2400 extends outwardly from the second shank portion 2220 but does not extend outwardly: (i) from the first shank portion 2210, (ii) from the third shank portion 2250, or (iii) from the fourth shank portion 2270. The third shank portion 2250 functions as a transition portion of the shank 2200. The fourth shank portion 2270 functions as the drilling portion of the shank 2200 and enables the fastener 2050 to be used to drill aligned holes in multiple objects (such as panels P1, P2, P3, and P4) into which the fastener 2050 will be tapped, fastened, and secured.

In this example embodiment, the head 2100, the shank 2200, and the thread formation 2400 are monolithically formed.

In this example embodiment, the fastener 2050 is made from a low carbon steel (such as but not limited to an AISI 1022 low carbon steel).

In this example embodiment, the fastener 2050 is made using a heat treatment of case hardening to provide a hardened fastener surface so that the fastener point can self-drill into steel objects and the thread formation can self-tap its own way to engage with steel objects. In this example embodiment, the hardened fastener surface case depth is maintained in a reasonable range because if the case depth is too deep, it can make the fastener too brittle. In this example embodiment, the case hardening process also provides a lower fastener core hardness to ensure that the fastener has enough ductility. If the core hardness is too high, it can make the fastener too brittle, and become vulnerable to hydrogen embrittlement failure and/or hydrogen assisted stress corrosion.

In this example embodiment, the fastener 2050 has a suitable coating (not shown) to provide corrosion protection and to provide lubrication when the fastener drills into one or more steel objects.

In this example embodiment, the fastener 2050 is made by: (1) cold-forming (or otherwise milling) a carbon steel member (not shown but further described below) that is sometimes initially called a blank having a suitable length and a suitable width; (2) then forming (such as by forging) the carbon steel member to form the head 2100; (3) then forming (such as by forging or milling) the carbon steel member to form the fourth shank portion 2270; (4) then forming (such as by roll threading) the carbon steel member to form the thread formation 2400; (5) then heat treating the carbon steel member; and (6) then coating the carbon steel member with a suitable corrosion resistance coating and curing this coating on the carbon steel member. It should be appreciated that one or more suitable cleaning and/or deburring processes may be employed in accordance with the present disclosure to form the fastener 2050.

More specifically, the head 2100 includes a bottom portion 2110 and a top portion 2140 integrally connected to the bottom portion 2110.

The bottom portion 2110 of the head 2100 is annular and has an outer diameter larger than width of 1210, and thick enough to function as an integrated washer. The annular bottom portion 2110 has a bottom surface 2112, a top surface 2114, and a generally cylindrical outer edge 2116 extending from and connect the bottom surface 2112 to the top surface 2114. The outer edge 2116 is rounded or convex along its entire surface. The bottom portion 2110 is also integrally connected to the first shank portion 210 which is a tapered portion (or can be a chamfer or a fillet). In various embodiments, this tapered portion is needed for manufacturing reasons and also to avoid stress concentration under the head 2100.

In this example embodiment the bottom portion 2110 includes a plurality of outwardly extending serrations (not labeled) that form the bottom surface 2112. The serrations point in the clockwise direction so that they resist rotation as they are backed out. The serrations prevent the fastener loosing under vibration loads.

The top portion 2140 of the head 2100 defines an external hexagonal mechanical engaging structure having six sides (not labeled) and six corners (not labeled) that define an upper recessed portion (not labeled). The six sides are engageable by an appropriate wrench or hex socket (not shown) configured to rotate and drive the self-drilling self-tapping fastener 2050.

In this example embodiment, the top portion 2140 of the head 2100 has a height of 0.147 inches (0.37 cms). The top portion 2240 has an outer width of .305 inches (0.77 cms) from side to side. The top portion 2140 has an outer width of 0.340 inches (0.86 cms) from corner to corner.

It should be appreciated that other suitable mechanical engaging structures (not shown) can be employed in accordance with the present disclosure, such as but not limited to: (1) a straight slot (engageable by a flathead screwdriver), (2) a cross-shaped slot (engageable by a Phillips head screwdriver), (3) an internal star or six lobe shaped cavity (engageable by a six lobe driver), or (4) an internal hexagonal shaped cavity (engageable by an Allen wrench).

The shank 2200 has a longitudinal length, which is 1.125 inches (2.86 cms), and includes: (1) the first shank portion 2210; (2) the second shank portion 2220; (3) the third shank portion 2250; and (4) the fourth shank portion 2270.

The first shank portion 2210 is integrally connected to the head 2100 at an inner end (not labeled) and is integrally connected to the second shank portion 2220 at an outer end (not labeled). The first shank portion 2210 is tapered from the head 2100 to the second shank portion 2220.

The second shank portion 2220 is integrally connected to the first shank portion 2210 at an inner end (not labeled) and is integrally connected to the third shank portion 2250 at an outer end (not labeled). The second shank portion 2220 is annular and has a constant outer diameter (OD) from the inner end (adjacent to the first shank portion 2210) to the outer end (adjacent to the third shank portion 2250). The second shank portion 2220 has a length which is .530 inches (1.35 cms).

The third shank portion 2250 is integrally connected to the second shank portion 2220 at an inner end (not labeled) and is integrally connected to the fourth shank portion 2270 at an outer end (not labeled). The third shank portion 2250 is annular. The third shank portion 2250 has a length which is 0.090 inches (0.23 cms). The third shank portion 2250 functions as a transition areas between the flutes (described below) of the fourth shank portion 2270 and the thread formation 2400 on the second shank portion 2230 to ensure that the drilling of all of the multiple objects is complete before the thread formation 2400 engages the outmost object (such as P1 in Figure 8) .

The fourth shank portion 2270 includes an inner end (not labeled) that is integrally connected to the third shank portion 2250 and an outer end (not labeled). The outer end is a free end and includes a drill tip 2350 such as described below. The fourth shank portion 2270 is configured to enable the fastener 2050 to be self-drilling. In particular, the fourth shank portion 2270: (1) defines a longitudinally extending first flute 2310; (2) defines a longitudinally extending second flute (not shown) and (3) includes the drill tip 2350.

The fourth shank portion 2270 is partially annular and has multiple different outer surfaces and outer diameters, as further described below. In this example embodiment, the fourth shank portion 2270 has a length which is 0.500 inches (1.27 cms). When viewed from the side, the fourth shank portion 2270 has a first constant outer diameter until reaching the drill tip 2350. When viewed from the top, the fourth shank portion 2270 has a narrowing outer width.

The first flute 2310 defined in the fourth shank portion 2270 includes a longitudinally extending first surface (not labeled) and a longitudinally extending second surface (not labeled). The longitudinally extending first surface and the longitudinally extending second surface meet along a longitudinally extending connection line (not labeled).

Likewise, the second flute (not shown) defined in the fourth shank portion 2270 includes a longitudinally extending first surface (not shown) and a longitudinally extending second surface (not shown). The longitudinally extending first surface and the longitudinally extending second surface meet along a longitudinally extending connection line.

The first and second flutes provide part of the self-drilling functionality of the fastener 2050, and particularly provide areas for the debris cut by the drill tip 2350 to move along part of the length of the shank 2200 of the fastener 2050 and out of the hole(s) being formed by the fastener 2050 in the objects to which the fastener 2050 will be tapped, fastened, and secured.

For each flute, the flute length in this example embodiment is 0.500 inches (1.27 cms).

This relatively long flute length in part enables the fastener 2050 to be drilled through the multiple objects. Specifically, the longer flute length enables the entire drill tip 2350 of the fourth shank portion 2270 to extend through the multiple objects before the thread formation 2400 engages any of the objects such as the panels P1, P2, P3, and P4.

The drill tip 2350 of the fourth shank portion 2270 includes a drill tip point.

The drill tip 2350 includes: (1) a first cutting blade (not labeled) having a first cutting edge (not labeled), a first cutting surface (not labeled), and an outer surface (not labeled); and (2) a second cutting blade (not labeled) having a second cutting edge (not labeled), a first cutting surface (not labeled), and an outer surface (not labeled). The first cutting blade and the second cutting blade are tapered toward each other and specifically the first cutting edge and the second cutting edge are tapered toward each other, and form a 110-130 degree point angle.

The outer diameter of the drill tip 2350 decreases moving along the longitudinal axis in the direction of or toward the pointed end from: (1) a point outer diameter of 0.0.195 inches (0.50 cms), and (2) a sharp point at the drill point. The drill tip 2350 has a cold-formed as a sharp point in this embodiment. In various other embodiments, the drill tip 2350 is otherwise suitably rounded or formed.

The first cutting edge extends at an angle to the outer surface of the fourth shank portion 2270. The second cutting edge also extends at an angle to the outer surface of the fourth shank portion 2270. In this example embodiment, the point cutting edge angle is 120 degrees.

The drill tip 2350 is directly positioned along the central longitudinal axis, but may slightly vary from being along the central longitudinal axis such as due to manufacturing tolerances.

The point eccentricity or total indicator reading (TIR) of the drill tip 2350 is 0.010 or less inches (0.025 or less cms). The point eccentricity or TIR is the difference between the maximum and minimum measurement readings of an indicator on the planar or cylindrical contoured surfaces of the drill tip 2350 representing its/their respective amount(s) of deviation from flatness or roundness.

The helical thread formation 2400 is integrally connected to and extends radially outwardly from the first portion 2220 of the shank 2200 but not the second portion 2250 and not the third portion 2270 of the shank 2200. The helical thread formation 2400 extends substantially along the entire second shank portion 2220.

The helical thread formation 2400 includes: (1) a first helical thread portion 2420; and (2) a second helical thread portion 2440.

The helical thread formation 2400 has a substantially constant outer diameter from start of the thread formation 2400 adjacent to the head 2100 to almost the end of the thread formation 2400 on the second shank portion 2220 (which is the first helical thread portion 2420). More specifically, the top section (left side) of the second shank portion 2220 has threads with a full thread height and the bottom section (right side) of the second shank portion 2220 includes the first 1-3 threads that do not have full thread height. This enables the thread to tap into steel smoothly. Thus, the outer diameter or height of the thread formation 2400 begins to decrease until gradually terminating at the outer surface of the second shank portion 2220.

The helical thread formation 2400 has a length (LHTF) of 0.530 inches (1.35 cms).

The thread outer diameter (OD) of the helical thread formation 2400 is 0.204 inches (0.52 cms).

The pitch distance of the helical thread formation 2400 is 14 tpi (and preferably 14 threads per inch (5.5 threads per cm)).

It should be appreciated that in the fastener 2050 of the embodiment of Figures 11, 12, and 13, the first portion of helical thread formation 2400 is close to the head 2100 and has a full thread outer diameter. This helical thread formation 2400 can have an asymmetrical profile (such as Buttress threads). As best shown in Figure 11, this helical thread formation 2400 has a 6 degree angle on one side and a 45 degree angle on the other side. This helical thread formation 2400 prevents the fastener 2050 from loosing grip when subjected to vibrational loads. The second portion of the helical thread formation 2400 that is close to drill point and particularly the 1-3 threads in the front have a symmetrical profile that is 30 degrees on each side. These threads assist in thread-rolling and increase die life.

It should also be appreciated that in the fastener 2050 of the embodiment of Figures 11, 12, and 13, the head 2100 includes a relatively large diameter washer and a relatively small hex member. The relatively large diameter washer increases fastener pull over performance and shear performance. The relatively small hex member has 5/16 inch cross flats. The washer includes a 20 degree slope so that washer gets enough support from the hex member.

It should further be appreciated that the fastener 2050 of the embodiment of Figures 11, 12, and 13 includes a relatively small drill point. The smaller drill point with the diameter of 0.195 inches (in comparison to a drill point with a diameter of 0.204 inches) provides higher pullout values.

It should also be appreciated that the above dimensions are based on actual measurements and thus take into account manufacturing tolerances. It should be appreciated that the above dimensions are subject to reasonable variations due to manufacturing tolerances in accordance with the present disclosure.

It will be understood that modifications and variations may be effected without departing from the scope of the novel concepts of the present invention, and it is understood that this application is to be limited only by the scope of the claims.

## Claims

1. A self-drilling self-tapping fastener comprising:
a head including a mechanical engaging structure engageable by a tool;
a shank integrally connected to and extending from the head, the shank including:
a first shank portion connected to and extending from the head,
a second shank portion connected to and extending from the first shank portion,
a third shank portion connected to and extending from the second shank portion, and
a fourth shank portion connected to and extending from the third shank portion,
the fourth shank portion defining a longitudinally extending first flute,
the fourth shank portion defining a longitudinally extending second flute,
the fourth shank portion including a drill tip; and
a helical thread formation integrally connected to and extending radially outwardly from the second shank portion but not from the third shank portion and not from the fourth shank portion.

2. The self-drilling self-tapping fastener of Claim 1, wherein a first part of helical thread formation has threads with full thread height and a second part of helical thread formation contains 1 to 3 not fully filled threads extending from the second shank portion.

3. A self-drilling self-tapping fastener comprising:
a head including a mechanical engaging structure engageable by a tool;
a shank integrally connected to and extending from the head, the shank having a 1.125 inch length, the shank including:
a first shank portion connected to and extending from the head,
a second shank portion connected to and extending from the first shank portion and having a 0.580 inch length,
a third shank portion connected to and extending from the second shank portion, the third shank having a 0.045 inch length, and
a fourth shank portion connected to and extending from the third shank portion, the fourth shank having a 0.500 inch length,
the fourth shank portion defining a longitudinally extending first flute,
the fourth shank portion defining a longitudinally extending second flute,
the fourth shank portion including a drill tip; and
a helical thread formation integrally connected to and extending radially outwardly from the second shank portion but not from the first shank portion, not from the third shank portion, and not from the fourth shank portion, the helical thread formation being 0.580 inches in length.

4. The self-drilling self-tapping fastener of Claim 3, wherein a first part of helical thread formation has threads with full thread height and a second part of helical thread formation contains 1 to 3 not fully filled threads extending from the second shank portion.

5. A self-drilling self-tapping fastener comprising:
a head including a mechanical engaging structure engageable by a tool;
a shank integrally connected to and extending from the head, the shank having a 1.125 inch length, the shank including:
a first shank portion connected to and extending from the head,
a second shank portion connected to and extending from the first shank portion and having a 0.530 inch length,
a third shank portion connected to and extending from the second shank portion, the third shank having a 0.090 inch length, and
a fourth shank portion connected to and extending from the third shank portion, the fourth shank having 0.500 inch length,
the fourth shank portion defining a longitudinally extending first flute,
the fourth shank portion defining a longitudinally extending second flute,
the fourth shank portion including a drill tip; and
a helical thread formation integrally connected to and extending radially outwardly from the second shank portion but not from the first shank portion, not from the third shank portion, and not from the fourth shank portion, the helical thread formation being 0.530 inches in length.

6. The self-drilling self-tapping fastener of Claim 5, wherein a first part of helical thread formation has threads with full thread height and a second part of helical thread formation contains 1 to 3 not fully filled threads extending from the second shank portion.
